Europäisches Patentamt

European Patent Office

Office européen des brevets

(11) Numéro de publication : **0 669 186 A1**

# (12) DEMANDE DE BREVET EUROPEEN

(21) Numéro de dépôt : **95400223.4**

(22) Date de dépôt : **02.02.95**

(51) Int. Cl.⁶ : **B23Q 27/00,** B23F 15/00,
B23C 1/18, B23C 3/24

(30) Priorité : **25.02.94 FR 9402174**

(43) Date de publication de la demande :
**30.08.95 Bulletin 95/35**

(84) Etats contractants désignés :
**BE CH ES IT LI**

(71) Demandeur : **FRAMATOME CONNECTORS
INTERNATIONAL
Tour Fiat,
1 Place de la Coupole
F-92400 Courbevoie, Paris (FR)**

(72) Inventeur : **Boyer, Jean-Charles
13 Route de la Caillotte
F-45460 BOUZY LA FORET (FR)**

(74) Mandataire : **Lepercque, Jean et al
Cabinet Claude Rodhain SA
3, rue Moncey
F-75009 Paris (FR)**

(54) **Procédé de fraisage d'au moins une région localisée d'une pièce.**

(57) Le procédé comprend : une mise en rotation de la pièce autour d'un axe horizontal (Oy) d'une région cylindrique de celle-ci de rayon $R_p$ et une mise en contact d'un contour extérieur d'une fraise $R_F$ avec la région cylindrique de la pièce en un point d'usinage (P) ; ladite fraise tournant autour d'un axe de rotation interceptant (O') un premier axe transversal (Ox) perpendiculaire audit axe longitudinal (Oy) et interceptant (o) ce dernier (Oy), ledit axe de rotation étant dans un plan parallèle à l'axe longitudinal (Oy) et à un deuxième axe transversal (Oz) de la pièce perpendiculaire au premier axe transversal et à l'axe longitudinal (Oy) et interceptant ceux-ci, l'axe de rotation faisant avec le deuxième axe transversal (Oz) un angle $\alpha$ tel que la vitesse tangentielle de la fraise parallèlement au deuxième axe (Oz) soit égale à la vitesse tangentielle de la pièce.

FIG_1a

EP 0 669 186 A1

La présente invention a pour objet un procédé de fraisage d'au moins une région localisée, notamment une clef ou ergot ou bien une rainure, dans une pièce.

Pour ce type de pièces les procédés traditionnels font appel à deux opérations successives :

1 - Tournage des formes de révolution en laissant bruts les secteurs destinés à présenter un profil droit axial tel qu'ergot ou clé,

2 - Reprise de la pièce pour réaliser les formes droite, soit sur presse, avec pour inconvénient principal une déformation des pièces, soit sur grignoteuse avec un temps d'usinage élevé, soit sur fraiseuse pour détourage, avec un temps d'usinage élevé et un coût machine élevé.

Il existe d'autre part des techniques regroupées sous le terme général "tournage polygonal" qui permettent de réaliser des pièces de section polygonale régulière (par exemple réalisation de plats). Ces techniques sont décrites en particulier dans les demandes de brevet FR-A-2 301 326 et FR-A-2 171 187.

Ces techniques sont basées sur une opération combinant fraisage et tournage utilisant une fraise possédant un axe de rotation parallèle à l'axe de la pièce, une vitesse de rotation angulaire synchrone à celle de la pièce et un même sens de rotation que la pièce ce qui donne au point de contact de la pièce et de l'outil des vitesses périphériques de sens opposés. Cette dernière technique est décrite dans "Dispositif de filetage par fraise et de tournage polygonal TD" (avril 1974 - Hemmann TRAUB MACHINENFABRIK - RFA). Elle ne convient pas à la réalisation de clefs ou d'ergots.

La présente invention a pour objet un procédé de fraisage permettant de réaliser des régions localisées telles que des clefs ou des ergots, en une seule opération et avec un temps machine réduit, et donc avec un coût réduit.

Le procédé selon l'invention est caractérisé en ce qu'il comporte :

- une mise en rotation de la pièce autour d'un axe horizontal d'une région cylindrique de celle-ci, cette région cylindrique ayant un rayon $R_p$.
- une mise en contact d'un contour extérieur d'une fraise de rayon $R_F$ avec la région cylindrique de la pièce en un point d'usinage,

ladite fraise tournant autour d'un axe de rotation interceptant un premier axe transversal de la pièce qui est perpendiculaire audit axe longitudinal et qui intercepte ce dernier, ledit axe de rotation étant situé dans un plan parallèle à l'axe longitudinal et à un deuxième axe transversal de la pièce perpendiculaire au premier axe transversal et à l'axe longitudinal et interceptant ceux-ci, l'axe de rotation faisant avec le deuxième axe transversal un angle $\alpha$ non nul. Cet angle est de préférence tel que la vitesse tangentielle de la fraise parallèlement au deuxième axe transversal soit égale à la vitesse tangentielle de la pièce.

Les vitesses angulaires de la pièce et de la fraise sont avantageusement dans des rapports entiers, c'est-à-dire, quelles sont multiples, sous-multiples ou égales.

Avantageusement la pièce et la fraise ont des vitesse angulaires égales. Avec $\sin \alpha = R_p/R_F$, on obtient des vitesses tangentielles égales pour la fraise et la pièce.

Les bords latéraux des dents de la fraise sont avantageusement inclinés par rapport à l'axe de rotation de la fraise, ce qui permet en particulier une attaque perpendiculaire de l'ergot à insérer par la dent.

La fraise peut présenter un ou plusieurs évidements angulaires dépourvus de dents de manière à permettre l'usinage d'un ou plusieurs ergots.

La fraise présente, selon un mode de réalisation préféré, des dents ayant un bord externe à profil concave elliptique.

Selon un mode de réalisation préféré, le procédé comporte une étape d'avance de la fraise parallèlement audit axe longitudinal, ce qui permet de réaliser un ou plusieurs profils allongés selon cette direction.

D'autres caractéristiques et avantages de l'invention apparaîtront mieux à la lecture de la description qui va suivre, donnée à titre d'exemple non limitatif en liaison avec les dessins qui représentent :

- les figures la et lb un dispositif pour la mise en oeuvre de ce procédé d'usinage selon l'invention, respectivement en vue latérale et en vue de dessus ;

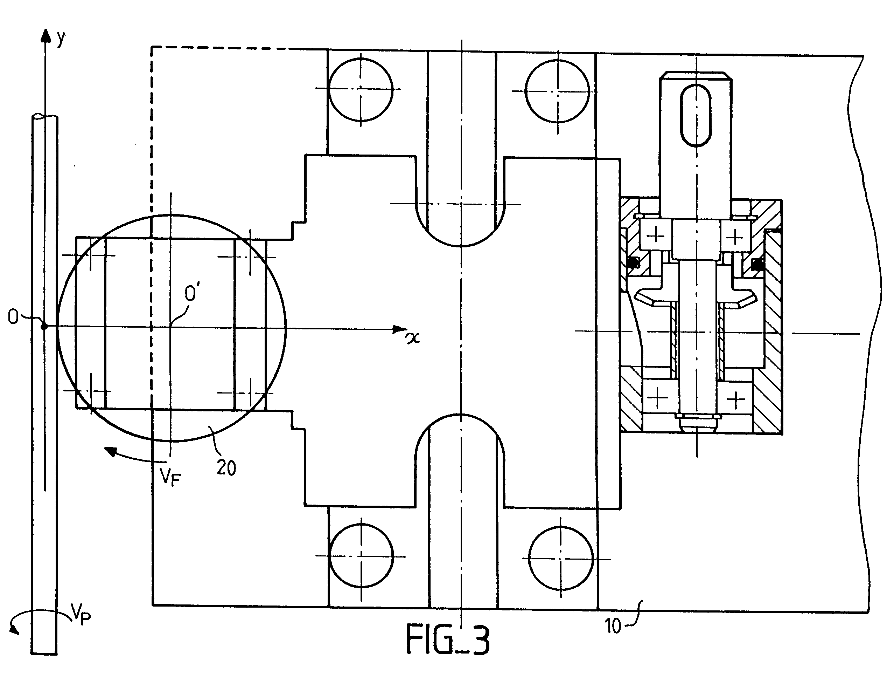

- les figures 2 et 3, une machine d'usinage pour la mise en oeuvre de l'invention, respectivement en vue latérale et en vue de dessus ;
- la figure 4 une vue de dessus schématique d'un mode de réalisation d'une fraise pour la mise en oeuvre du procédé selon l'invention ;
- la figure 5 un schéma illustrant l'usinage d'un ergot selon le procédé suivant l'invention ;
- les figures 6, 7a, 7b et 7c illustrent le procédé selon l'invention, respectivement par une vue longitudinale de la pièce à insérer et de la fraise, par des vues de dessus de la fraise, (figures 7a et 7b) et par une vue latérale de celleci ;
- et la figure 8 un mode de réalisation préféré des dents d'une fraise selon l'invention.

Selon les figures, une pièce à usiner 1, présente par exemple une couronne annulaire 2 dans laquelle un ergot 3 doit être usiné, cette couronne 2 ayant après usinage un rayon $R_p$ (ergot non compris). La pièce à usiner 1 est mise en rotation autour d'un axe Oy, ici un axe horizontal, avec une vitesse de rotation égale à Np tours/minute, correspondant à une vitesse tangentielle $V_p$.

Une fraise 20 de rayon extérieur $R_F$ est mise en rotation avec une vitesse de rotation égale à $N_F$ tours/minute autour d'un axe O'z'. Un axe Ox, perpendiculaire à l'axe Oy (et également horizontal dans l'exemple représenté) intercepte en O' l'axe O'z'. Soit Oz l'axe passant par O et perpendiculaire aux axes Ox et Oy, c'est-à-dire un axe vertical dans l'exemple représenté. Soit O'z l'axe passant par O' et parallèle à l'axe Oz.

L'axe O'z est parallèle aux axes oy et Oz et forme avec l'axe O'z' un angle $\alpha$.

Cet angle $\alpha$ est de préférence choisi de manière que la composante de la vitesse tangentielle de la fraise sur l'axe Oz (ici vertical) soit égale à la vitesse tangentielle de la pièce 1.

De ce fait, la fraise 20 présente un mouvement relatif de grignotage par rapport à la pièce 1 à son point de contact avec celle-ci.

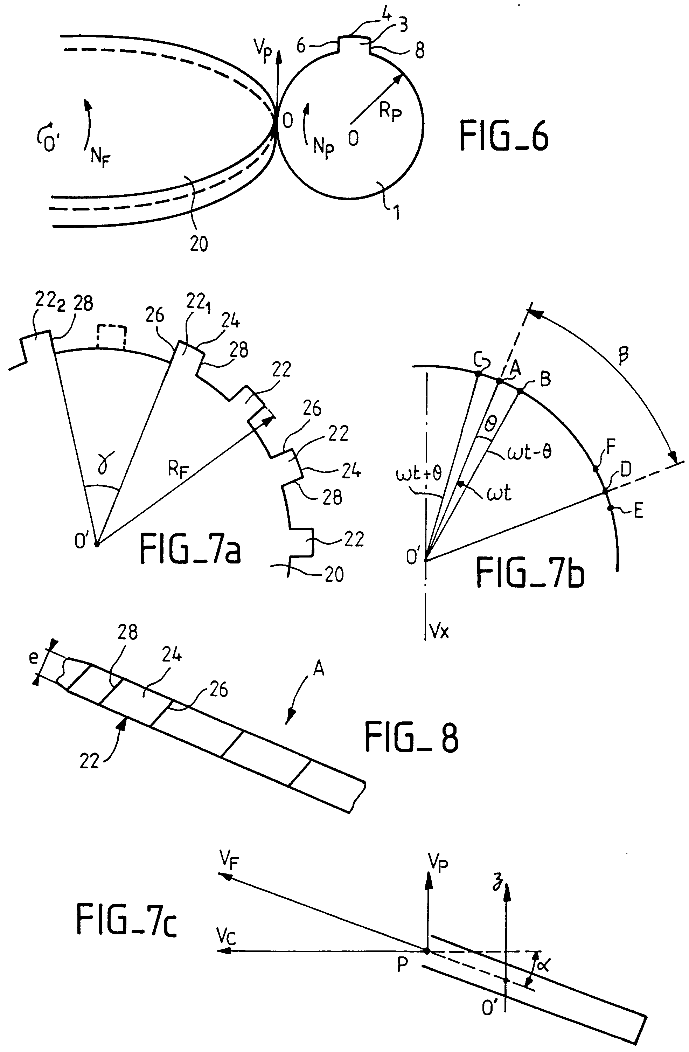

En un point d'usinage P, on a (figure 7c) :

$$V_p = V_F \sin \alpha$$

On a :

$$V_p = 2\pi R_P N_p$$
$$V_F = 2\pi R_F N_F$$

d'où

$$\sin\alpha = \frac{R_p N_p}{R_F N_F}$$

Ceci permet de définir un point d'usinage P se déplaçant sur la pièce 1 selon un parcours qui est assimilable à un segment de droite.

Pour obtenir un usinage régulier, il faut que $N_p/N_F$ ou $N_F/N_p$ forment des rapports entiers. En général, on choisit $N_p = N_F$.

Pour réaliser un ergot, il suffit que la fraise présente un secteur évidé (ou ne présentant pas de dent) de manière qu'elle n'enlève pas de matière à l'endroit souhaité.

L'évidement sur la fraise 20 est réalisé en biais avec un angle tel que les flans 26 et 28 les dents $22_1$ et $22_2$ qui réalisent les flancs 6 et 8 de l'ergot 3 sont le plus près possible de l'axe de fraise 20 et donc du point où la synchronisation tangentielle est réalisée.

D'autre part, il est avantageux de donner au profil extérieur 24 des dents 22 une forme concave elliptique.

On remarquera toutefois qu'en pratique une fraise classique à profil dont à laquelle une ou plusieurs dents sont enlevées convient pour la mise en oeuvre du procédé.

A la figure 7b, les points A, B et c (représentant une dent 22 de la fraise 20, et les points DEF la dent 22 suivante. Dans le calcul qui va suivre, on suppose que la fraise 20 et la pièce 1 tournent à la même vitesse angulaire En dehors de la ou des zones de réalisation d'un ergot les usinages effectués par deux dents successives doivent se chevaucher pour ne pas laisser de matière.

L'écart angulaire $\beta$ (exprimé en radians) entre deux dents 22 doit être inférieur à une valeur donnée :

$$\beta < \pi - 2 \text{ Arc cos} \frac{e}{2 R_P \text{ Cos } \alpha}$$

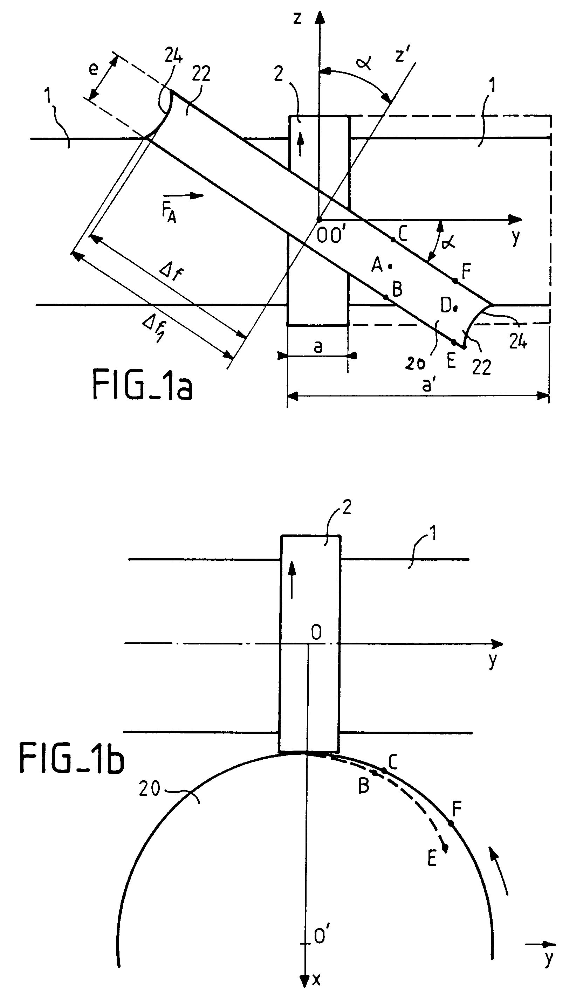

avec e = hauteur des dents 22 de la fraise 20 (voir figures 1a et 8).

L'angle $\theta$, demi-largeur angulaire d'une dent 22 de la fraise 20, a pour valeur optimale

$$\theta = \text{Arc cos} \left(\frac{e}{2R_P \cos\alpha}\right) - \frac{\pi}{2}$$

Cette valeur permet la meilleure approximation pour un usinage cylindrique du contour cylindrique 2 en dehors de l'ergot 3.

Entre les dents $22_1$ et $22_2$, il est prévu un évidement angulaire $\gamma$, c'est-à-dire une zone angulaire dépourvue de dents 22 (voir figures 4 à 7a). Les bords latéraux 26 de la dent $22_1$, et 28 de la dent $22_2$ permettent l'usinage des bords latéraux 6 et 8 de l'argot 3. Le bord extérieur 4 de l'ergot 3 reste au diamètre de la couronne 2. L'ergot 3 présente une largeur $\varepsilon$ (figure 5).

Il vient alors :

$$\gamma = \text{Arc sin} \frac{e}{2R_p \cos \alpha} + 2 \text{ Arc sin} \left(\frac{\varepsilon}{2R_p}\right) - \theta$$

Le nombre de dents minimal de la fraise est alors défini par la formule :

$$\gamma + (n - 1)\beta = 2\pi$$

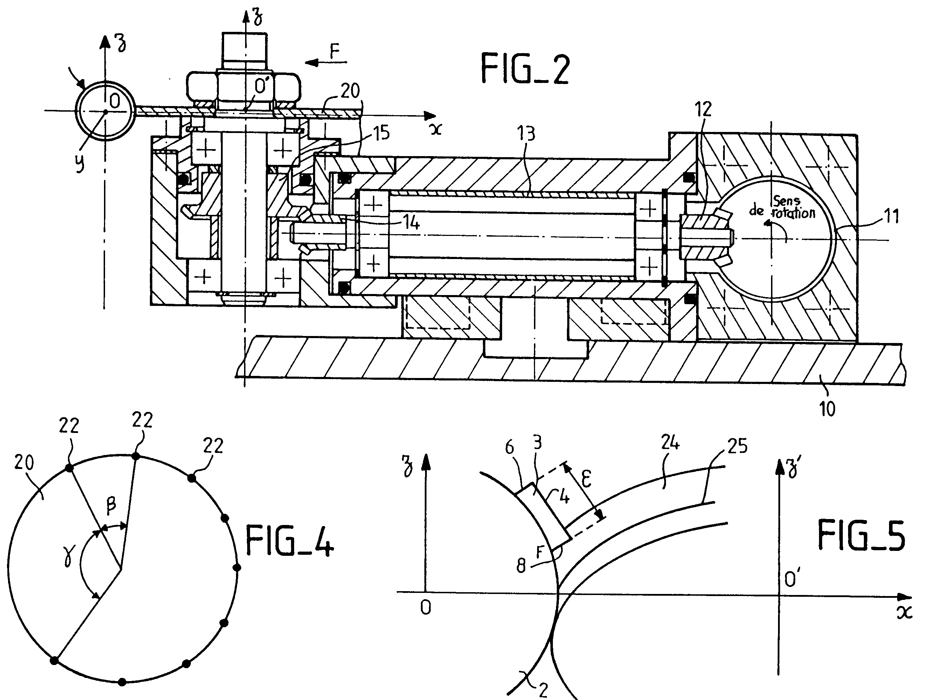

Selon l'invention l'usinage est réalisé par simple plongée radiale (flèche F sur figure 2). La réalisation des clefs ou ergots 5 peut s'effectuer à l'aide d'un tour sans indexage de broche.

Comme la pièce 1 tourne, un autre usinage peut être réalisé en parallèle. L'usinage d'un ergot n'augmente donc pas le temps de production.

L'usinage peut comporter une ou plusieurs étapes d'avance longitudinale selon l'axe Oy (flèche FA) de manière à réaliser des profils de grande longueur. Cette longueur est en particulier égale à la longueur a' d'une couronne 2 représentée en pointillé à la figure 1a.

Le réglage est simple. A partir de la position représentée à la figure 2 ($\alpha = 0$), il suffit de régler l'angle $\alpha$, et la hauteur de la fraise selon l'axe O'z et la profondeur de détourage (avance de la fraise selon l'axe O'x). A la figure 2, la fraise 20 est entraînée par un mécanisme 15 qui engrène avec une roue dentée 14 d'axe horizontal elle-même entraînée par un axe de couplage 13 et une roue dentée 12 elle-même entraînée par un axe d'entraînement 11.

La valeur de l'angle $\alpha$ permet de régler la forme de l'ergot ou du profil. Si la vitesse tangentielle de la fraise sur l'axe Oz est égale à la vitesse tangentielle de la pièce, la forme de l'ergot ou du profil est pratiquement plane.

La fraise 20 est facile à réaliser. Sous sa forme la plus simple, il s'agit d'une fraise standard avec un évidement sur un angle $\gamma$ réalisé à la meule.

le procédé selon l'invention peut être mis en oeuvre sur toute machine à décolleter comportant une prise de vitesse synchrone pour filetage par fraisage ou polygonage, sur tout tour à poupée fixe, ou mobile, à cames mono ou multibroches, ou bien encore sur des tours de production à commande numérique à synchronisation mécanique ou électronique.

Le procédé selon l'invention convient pour réaliser toutes les pièces comportant des clefs ou des ergots de faibles dimensions, en particulier sur des pièces en laiton ou en aluminium.

Les applications principales sont les connecteurs électriques ou fluidiques, ou bien la robinetterie.

Dans la description ci-dessus, on a pris en considération le cas préféré selon lequel $N_p = N_F$.

$N_P$ peut être un multiple de $N_F$ ($N_p = kN_F$). Dans ce cas la fraise 20 présente plusieurs évidements angulaires $\gamma$ espacés de 360°/k pour chaque ergot 3 à réaliser.

$N_F$ peut être un multiple de $N_p$ ($N_F = jN_p$). Dans ce cas, à un évidement angulaire $\gamma$ de la fraise 20, correspond j ergots 3 de la pièce 1.

Exemple :

Réalisation d'ergots sur un tube 1 de diamètre extérieur 12 mm, avec une fraise dont le diamètre est égal à 3 fois celui de la pièce et comportant 64-1 = 63 dents;

Le procédé selon l'invention est également applicable à la réalisation de rainures. Dans ce cas, la fraise comporte un nombre limité de dents (au minimum une dent), dont le profil définit la largeur de la rainure.

## Revendications

**1 -** Procédé de fraisage d'au moins une région localisée dans une pièce caractérisé en ce qu'il comporte :

- une mise en rotation de la pièce autour d'un axe horizontal (Oy) d'une région cylindrique de celle-ci, cette région cylindrique ayant un rayon $R_p$.
- une mise en contact d'un contour extérieur d'une fraise $R_F$ avec la région cylindrique de la pièce en un point d'usinage (P),

ladite fraise tournant autour d'un axe de rotation (0'Z') interceptant (en O') un premier axe transversal (Ox) de la pièce qui est perpendiculaire audit axe longitudinal (Oy) et qui intercepte (en o) ce dernier (Oy), ledit axe de rotation (O'Z') étant situé dans un plan parallèle à l'axe longitudinal (Oy) et à un deuxième axe transversal (Oz) de la pièce perpendiculaire au premier axe transversal et à l'axe longitudinal (Oy) et interceptant ceux-ci, l'axe de rotation faisant avec le deuxième axe transversal (Oz) un angle .

**2 -** Procédé selon la revendication 1, caractérisé en ce que la vitesse tangentielle de la fraise parallèlement au deuxième axe transversal (Oz) est égale à la vitesse tangentielle de la pièce.

**3 -** Procédé selon une des revendications 1 ou 2 caractérisé en ce que les vitesses angulaires de la pièce et de la fraise sont dans des rapports entiers.

**4 -** Procédé selon la revendication 3 caractérisé en ce que la pièce et la fraise ont des vitesses angulaires égales.

**5 -** Procédé selon la revendication 4 caractérisé en ce que sin $\alpha = R_p / R_F$.

**6 -** Procédé selon une des revendications précédentes caractérisé en ce que la fraise présente des dents ayant des bords latéraux inclinés par rapport à l'axe de rotation de la fraise.

**7 -** Procédé selon une des revendications précédentes caractérisé en ce que la fraise présente au moins un évidemment angulaire dépourvu de dents de manière à permettre l'usinage d'un ergot.

**8 -** Procédé selon la revendication 7, caractérisé en ce que la fraise présente des dents ayant un bord externe à profil concave elliptique.

**9 -** Procédé selon une des revendications précédentes caractérisé en ce qu'il comporte une étape d'avance de la fraise parallèlement audit axe longitudinal (Oy) de manière à réaliser un profil allongé.

FIG_1a

FIG_1b

FIG_2

F

O'

20

15

13

12

Sens de rotation

14

11

10

FIG_4

22
22
22

20

β

γ

FIG_5

6  3

24  25

ε

4

8  F

2

0

x

O'

EP 0 669 186 A1

FIG_3

EP 0 669 186 A1

FIG_6

FIG_7a

FIG_7b

FIG_8

FIG_7c

Office européen
des brevets

**RAPPORT DE RECHERCHE EUROPEENNE**

Numero de la demande

EP 95 40 0223

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 522 973 (RADIALL) abrégé * figures 6-9 * | 1 | B23Q27/00 B23F15/00 B23C1/18 B23C3/24 |
| A | GB-A-1 195 011 (BRADLEY) * page 2, ligne 20 - ligne 25; figure 2 * | 8 | |
| | | | **DOMAINES TECHNIQUES RECHERCHES (Int.Cl.6)** |
| | | | B23C B23F B23Q |

Le présent rapport a été établi pour toutes les revendications

| Lieu de la recherche | Date d'achèvement de la recherche | Examinateur |
|---|---|---|
| LA HAYE | 6 Juin 1995 | Bogaert, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)